(19) Europäisches Patentamt
European Patent Office
Office européen des brevets

(11) **EP 0 828 148 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.⁷: **G01M 1/22**

(21) Anmeldenummer: **97111961.5**

(22) Anmeldetag: **14.07.1997**

(54) **Verfahren zum Eindrehen eines in einer Auswuchtmaschine drehgelagerten und mittels eines Antriebs antreibbaren Rotors, insbesondere Kraftfahrzeugrades, in Ausgleichspositionen zweier Ausgleichsebenen**

Procedure for positioning a rotor, in particular a vehicle wheel, rotatably coupled to driving means of a balancing machine, in its two plan balancing positions

Procédé de positionnement d'un rotor, en particulier une roue de véhicule, monté à rotation et raccordé à des moyens d'entraînement d'une machine d'équilibrage, dans les positions d'équilibrage en deux plans

(84) Benannte Vertragsstaaten:
**ES FR GB IT**

(30) Priorität: **06.09.1996 DE 19636268**

(43) Veröffentlichungstag der Anmeldung:
**11.03.1998 Patentblatt 1998/11**

(73) Patentinhaber: **Snap-On Deutschland Holding GmbH**
**40822 Mettmann (DE)**

(72) Erfinder:
• **Rothamel, Karl**
**64342 Seeheim-Jugenheim (DE)**
• **Röwe, Wolfgang**
**64440 Bickenbach (DE)**

(74) Vertreter: **Nöth, Heinz, Dipl.-Phys.**
**Eisenführ, Speiser & Partner**
**Arnulfstrasse 25**
**80335 München (DE)**

(56) Entgegenhaltungen:
EP-A- 0 168 514    US-A- 4 419 894
US-A- 5 209 116

EP 0 828 148 B1

**Beschreibung**

Die Erfindung betrifft ein Verfahren zum Eindrehen eines in einer Auswuchtmaschine drehgelagerten und mittels eines Antriebs antreibbaren Rotors, insbesondere Kraftfahrzeugrades, in Ausgleichspositionen zweier Ausgleichsebenen für einen dynamischen Unwuchtmassenausgleich.

Beim Anhalten einer Hauptwelle, auf welche zur Messung der Unwucht ein Rotor, insbesondere ein Kraftfahrzeugrad, aufgespannt ist, befindet sich die Hauptwelle bzw. der darauf aufgespannte auszuwuchtende Rotor in aller Regel nicht in der Ausgleichsposition, in welcher der Unwuchtausgleich, beispielsweise durch Einsetzen eines Ausgleichsgewichtes, durchgeführt wird. Beim Auswuchten beispielsweise eines Kraftfahrzeugrades ist es erwünscht, das auf die Hauptwelle aufgespannte Rad in eine solche Ausgleichsposition (Ausgleichswinkellage) zu bringen, daß die "leichte" Stelle, an welcher das Ausgleichsgewicht angebracht werden soll, senkrecht über der Hauptwelle (12-Uhr-Position) sich befindet. Beim Auswuchten des Rotors ist es daher erforderlich, den Rotor aus der angehaltenen Position in die für den Unwuchtausgleich gewünschte Drehwinkel-Stillstandsposition, welche der Ausgleichswinkellage entspricht, einzudrehen. Dies geschieht in der Praxis von Hand. Ferner muß beim Wechsel von der Ausgleichswinkellage, in welcher in einer ersten Ausgleichsebene ein Unwuchtausgleich am Rotor vorgenommen wurde, der Rotor in eine zweite Drehwinkelposition (zweite Ausgleichswinkellage) für einen Unwuchtausgleich in einer zweiten Ausgleichsebene gebracht werden, wenn am Rotor ein dynamischer Unwuchtausgleich vorgenommen werden soll. Auch hier wird in der Praxis der Rotor häufig von Hand in diese zweite Ausgleichswinkellage gedreht. Dabei ist es erforderlich, daß die Bedienungsperson eine Anzeige beobachtet, welche anzeigt, daß die Hauptwelle bzw. der darauf aufgespannte Rotor sich in der Ausgleichwinkellage befindet.

Aus der US 5,209,116 ist es bekannt, einen in einer Auswuchtmaschine drehgelagerten Rotor aus dem Stillstand auf eine bestimmte Drehzahl (1500 U/min), welche die Meßdrehzahl ist, zu beschleunigen und die Unwuchtmessung zur Bestimmung eines Massenauchsgleichs am Rotor durchzuführen. Um den Rotor in die Ausgleichsposition (Ausgleichswinkellage) einzudrehen, wird der Rotor abgebremst, wobei die Verzögerung des Rotors beim Abbremsen überwacht wird und in Abhängigkeit davon der Bremsvorgang so gesteuert wird, daß der Rotor in der Ausgleichsposition für den Unwuchtmassenausgleich angehalten wird.

Aus der DE 35 41 459 ist es bekannt, den Rotor nach dem Unwuchtausgleich in einer ersten Ausgleichsebene in eine zweite Ausgleichsposition für einen Unwuchtausgleich in einer zweiten Ausgleichsebene einzudrehen. Ferner ist es aus der EP 0 383 038 A2 bekannt, mit Hilfe der Zählung von Impulsen, die Winkelinkremente darstellen, eine Drehzahlüberwachung beim Eindrehen des Rotors in die Ausgleichsposition durchzuführen und dabei ebenfalls in Abhängigkeit von der überwachten Rotorverzögerung eine Steuerung des Bremsvorgangs unter Auswertung der Inkrementalgeberimpulse bis zum Rotorstillstand durchzuführen. Auch die US 4,419,894 zeigt eine Überwachung und Steuerung des Hochlaufs und des Bremsvorgangs beim Eindrehen in die Ausgleichsposition unter Auswertung von Impulsen, welche Winkelinkremente darstellen. Aus der EP 0 168 514 A1 ist es zum Stillsetzen eines auszuwuchtenden Rotors bekannt, Taktimpulse eines Inkrementalgebers zum Stillsetzen des Rotors in der Ausgleichsposition zu verwenden und für den Start der Bremsphase das Beschleunigungsprofil eines Teils der Beschleunigungsphase (Hochlauf) auszuwerten. Aus der EP 0 550 816 A2 ist eine Positionsbremse als Eindrehhilfe, welche auch als Haltebremse zum Halten des in die Ausgleichsposition eingedrehten Rotors dient, bekannt. Aus der EP 0 524 465 ist ein Einphasenmotor (Kondensatormotor) bekannt, welcher zum Antrieb und Abbremsen eines Rotors in einer Auswuchtmaschine verwendet wird. Dabei wird zum Abbremsen eine Phasenverschiebung der an den Elektromotor angelegten Wechselspannungen durchgeführt.

Aufgabe der Erfindung ist es bei einem Verfahren der eingangs genannten Art, das Drehen des Rotors, insbesondere des Kraftfahrzeugrades, aus der ersten Ausgleichsposition in die zweite Ausgleichsposition zu vereinfachen.

Diese Aufgabe wird erfindungsgemäß durch die im Patentanspruch 1 angegebenen Merkmale gelöst.

Hierdurch wird erreicht, daß nach Eingabe eines Startbefehlsignals, beispielsweise durch Tastendruck, die Hauptwelle mit dem darauf befindlichen Rotor aus dem Stillstand in der ersten Ausgleichsposition automatisch bis in die zweite Ausgleichsposition gedreht wird, ohne daß die Bedienungsperson eine sich mit der Drehwinkellage ändernde Positionsanzeige, beispielsweise an einem Monitor, an der Auswuchtmaschine für das Eindrehen beobachten muß. Die Hauptwelle mit dem darauf aufgespannten Rotor wird automatisch in der zweiten Ausgleichsposition angehalten und kann beispielsweise durch eine Bremse, welche zum Abbremsen der Hauptwelle verwendet wurde, insbesondere eine Elektromagnetbremse, wie sie beispielsweise aus der EP 550 816 A1 bekannt ist, festgehalten werden.

In bevorzugter Weise wird jedoch der Bremsvorgang ohne zusätzliche Bremse mit Hilfe des Elektromotors, der den Antrieb der Hauptwelle beim Unwuchtmeßvorgang liefert, durchgeführt. Hierzu kommt in bevorzugter Weise ein Ein-Phasen-Wechselstrommotor, wie er beispielsweise aus der EP 524 465 B1 bekannt ist, oder ein Drehstrommotor zum Einsatz. Dabei wird die Bremswirkung allein dadurch erzielt, daß das Drehmoment im Antriebsmotor umgekehrt wird (Gegenstrombremse). Dies kann dadurch geschehen, daß die Phasenfolge der an den Elektromotor (Ein-Phasen-Wechselstrommotor oder Drehstrommotor) angelegten Wechselspannungen getauscht wird (90° Phasenverschiebung beim Ein-Phasen-Wechselstrommotor, 120° Phasenverschiebung beim Drehstrommotor) (z.B. Betriebszustand der Fig. 4 in EP 0 524 465 B1). Sobald die Hauptwelle und der darauf aufgespannte Rotor, insbesondere das Kraftfahrzeugrad, die gewünschte Ausgleichswinkellage erreicht hat, wird der Motorstrom exakt an dieser Ausgleichsposition abgeschaltet und damit ein Weiterdrehen der Hauptwelle und des darauf aufgespannten Rotors in Gegenrichtung verhindert. Aus der gemessenen Verzögerung der Hauptwelle beim Abbremsen ergibt sich ausgehend von der bestimmten Drehzahl der Hauptwelle ein bestimmter Bremsweg, der einem bestimmten Drehwinkel entspricht. Nach dem Abschalten des Hauptwellenantriebs wird bei der Erfindung der Bremsvorgang so gesteuert, daß das Ende dieses Bremsweges mit dem Differenzwinkel, welcher bis zur Ausgleichswinkelposition noch zurückzulegen ist, in Übereinstimmung kommt. Dies kann dadurch geschehen, daß der Bremsvorgang zu einem bestimmten Zeitpunkt beginnt, so daß nach Ablauf einer bestimmten Zeit, die dem noch zurückzulegenden Differenzwinkel bzw. Bremsweg bis zur Ausgleichswinkelposition entspricht, der Bremsvorgang beendet wird. Hierbei kann ein bestimmter Differenzwinkel, beispielsweise 30° bis zum Erreichen der Ausgleichswinkelposition vorgegeben werden.

Der Bremsweg kann hierzu auch zweistufig durchgeführt werden, wobei zwischen den beiden Bremsstufen (Bremsphasen) eine Unterbrechung des Bremsvorganges durchgeführt wird, um die Übereinstimmung des Endes des Bremsweges mit dem Differenzwinkel bis zur Ausgleichswinkelposition zu erzielen. Das Ende der Unterbrechung des Bremsvorganges kann dann bei einem bestimmten Differenzwinkel, beispielsweise bei 30°, liegen

Wenn im Verlauf des Bremsvorganges, z.B. in der zweiten oben beschriebenen Bremsphase die Übereinstimmung von Restbremsweg und Differenzwinkellage der Hauptwelle vorliegt, kann bevorzugt in einem kurzen Winkelabstand z.B. 3° vor Erreichen der Ausgleichswinkellage ein Zeitgeber zugeschaltet werden, der aus der zum Zeitpunkt der Zuschaltung vorliegenden Drehzahl und Drehwinkelposition der Hauptwelle bei der gemessenen Bremsverzögerung auf einer von der Drehung der Hauptwelle unabhängigen Zeitbasis ein Intervall bestimmt, an dessen Ende bei Stillsetzung der Hauptwelle der Motorstrom (Gegenstrom zum Abbremsen) abgeschaltet wird. Mit dem an die Drehung der Hauptwelle bzw. des Rotors in bekannter Weise (DE 31 24 248 A1 oder EP 74 416 A1) gekoppelten Inkrementalgeber, ist es nicht möglich bei der kurz vor Erreichen der Sollwinkelposition (Ausgleichswinkellage) herrschenden niedrigen Drehzahl exakt dann den als Gegenstrombremse wirkenden Motor abzuschalten, wenn die Hauptwelle und der Rotor die Ausgleichswinkellage erreicht haben. Durch das rechtzeitige Abschalten des Motors wird ein Drehen in Gegenrichtung verhindert.

Die Beschleunigung der Hauptwelle aus dem Stillstand bzw. aus der ersten Ausgleichsposition in einer ersten Ausgleichsebene erfolgt so, daß eine maximale Drehzahl von 80 U/min nicht überschritten wird. Hierdurch ist gewährleistet, daß bei geöffnetem Radschutz die Drehzahl so niedrig bleibt, daß die Bedienungsperson nicht durch vom Rad abfliegende Schmutzteilchen gefährdet wird. Die Begrenzung der Drehzahl läßt sich aus der Messung der Beschleunigung $a_1$ im Hochlauf, der Verzögerung $a_2$ beim Bremsen und der Differenz $\varphi_g$ zwischen dem Ist-Drehwinkel und dem Soll-Drehwinkel (Ausgleichswinkellage, insbesondere in der zweiten Ausgleichsebene) nach folgender Beziehung bestimmen:

$$n_{max} = \frac{60}{2 \cdot \pi} \sqrt{2 \cdot \varphi_g \frac{a_1 \cdot a_2}{a_2 - a_1}}$$

Beim Hochlauf wird die Drehzahl der Hauptwelle überwacht. Kurz vor Erreichen der berechneten maximalen Drehzahl $n_{max}$ wird das Drehmoment des Motors abgeschaltet und die Abbremsung der Hauptwelle mit dem darauf aufgespannten Rotor gemäß der Erfindung durchgeführt. Hierbei kann im Motor ein umgekehrtes Drehmoment (Gegenstrombremse) erzeugt werden oder eine Elektromagnetbremse ( EP 550 816 A1) eingeschaltet werden.

Anhand der Figuren wird die Erfindung noch näher erläutert. Es zeigt:

Fig. 1     einen Drehzahlverlauf welcher bei einem Ausführungsbeispiel der Erfindung sich ergibt, wobei auf der Ordinate die Drehzahl n der Hauptwelle und auf der Abszisse die Zeit t aufgetragen sind;

Fig. 2     ein Ablaufdiagramm für die Durchführung der Erfindung beim Eindrehvorgang;

Fig. 3     ein Drehzahlverlauf, bei welchem der Rotor nach der Durchführung des Unwuchtmeßlaufs in einer bestimmten Drehwinkelposition, insbesondere Ausgleichsdrehwinkellage, zum Stillstand gebracht wird;

Fig. 4     ein Ablaufdiagramm für den in Fig. 3 dargestellten Drehzahlverlauf; und

Fig. 5     ein Blockschaltbild, welches die wesentlichen Bestandteile zur Durchführung des erfindungsgemäßen Verfahrens enthält.

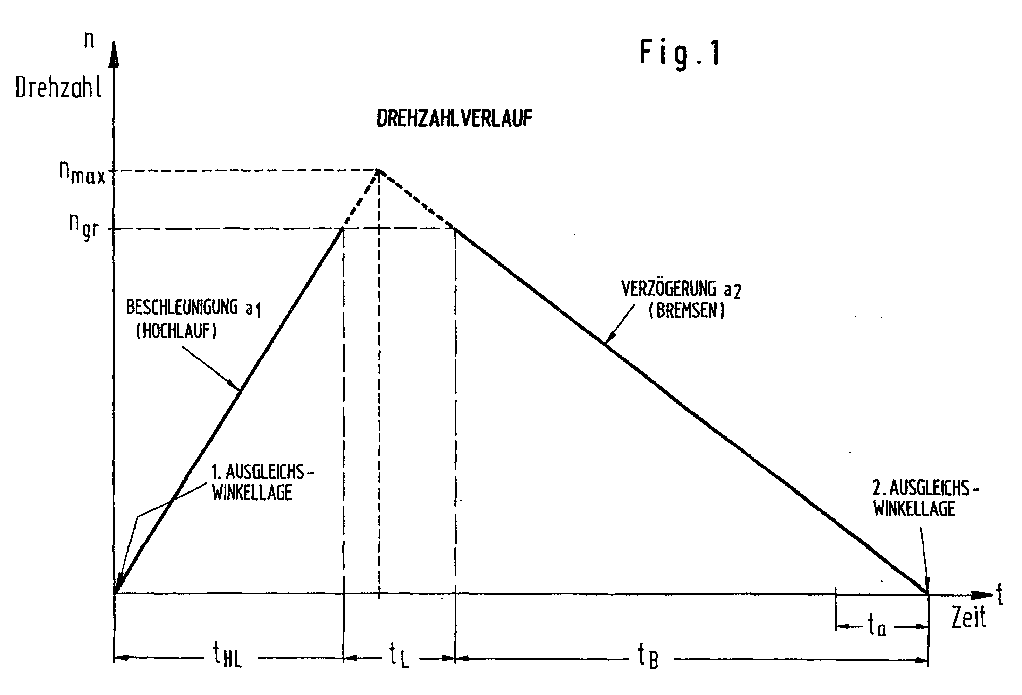

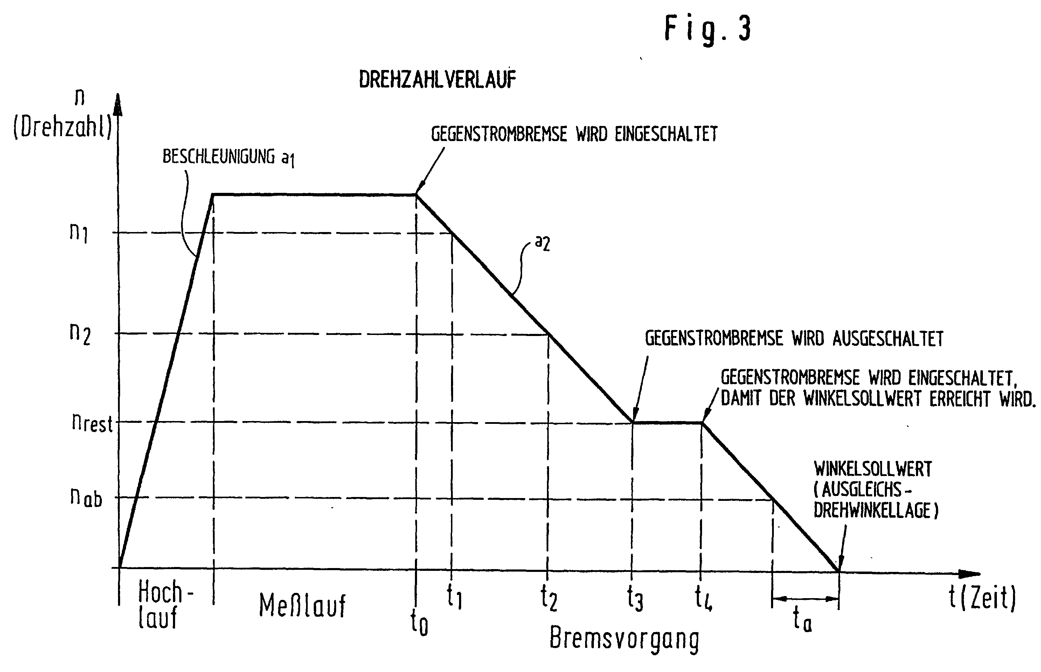

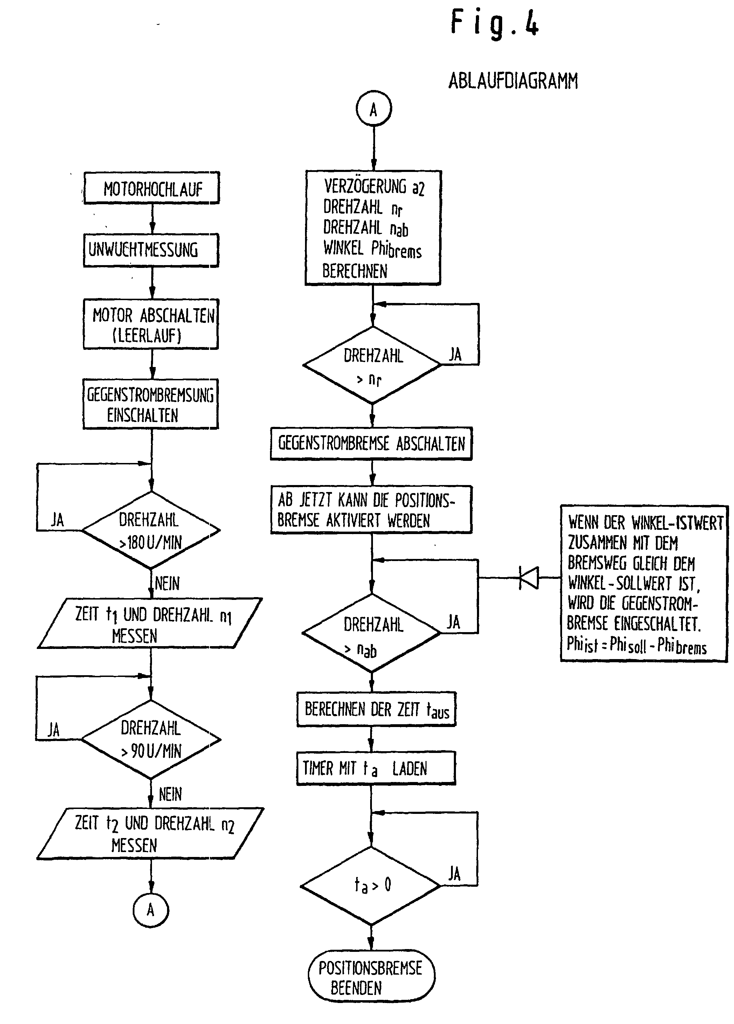

In der Fig. 1 ist ein Ausführungsbeispiel für einen Drehzahlverlauf dargestellt, bei welchem ein Kraftfahrzeugrad, welches auf die Hauptwelle der Auswuchtmaschine aufgespannt ist, aus einer ersten Ausgleichswinkellage in einer ersten Ausgleichsebene in eine zweite Winkellage in einer zweiten Ausgleichsebene gedreht wird. Wie im einzelnen anhand der Figuren 3 und 4 noch erläutert wird, wurde die Hauptwelle der Auswuchtmaschine in einer ersten Ausgleichswinkellage zum Stillstand gebracht. Nach Befestigen eines entsprechenden Ausgleichsgewichts in der Ausgleichswinkellage einer ersten Ausgleichsebene am Kraftfahrzeugrad wird das Kraftfahrzeugrad zur Erzielung eines dynamischen Umwuchtausgleichs in die zweite Ausgleichswinkellage für den Unwuchtausgleich in einer zweiten Ausgleichsebene gedreht. Um diesen Vorgang halbautomatisch durchzuführen kann beispielsweise durch Drücken einer Taste ein Startbefehl zum Hochlauf der Hauptwelle mit dem darauf aufgespannten Kraftfahrzeugrad gestartet werden. Aus dem Stillstand wird das Kraftfahrzeugrad mit der in Fig. 1 angegebenen Beschleunigung $a_1$ angetrieben. Aus dieser Beschleunigung $a_1$, welche während des Hochlaufs beim Eindrehen oder während des Hochlaufs beim Unwuchtmeßvorgang ermittelt werden kann, läßt sich zusammen mit der Bremsverzögerung $a_2$, die beim Abbremsen nach dem Meßlauf (wie noch erläutert wird) ermittelt wurde, und der Differenz $\varphi_g$ zwischen der Ist-Drehwinkellage (erste Ausgleichswinkellage) und der Soll-Drehwinkellage (zweite Ausgleichswinkellage) eine maximale Drehzahl $n_{max}$ berechnen, wie oben schon erläutert wurde. Beim Hochlauf wird die Hauptwelle bis kurz vor dieser maximalen Drehzahl beschleunigt und der Antrieb bei einer niedrigeren Drehzahl $n_{gr}$ abgeschaltet. Der Hochlauf hat bei dem in der Fig. 1 dargestellten Ausführungsbeispiel in dem Zeitraum $t_{HL}$ bis zur Drehzahl $n_{gr}$ stattgefunden. Dadurch, daß die Drehzahl unterhalb einer maximalen Drehzahl, beispielsweise 80 U/min, abgeschaltet wird, besteht keine Gefährdung der Bedienungsperson durch vom Rad abfliegende Schmutzteilchen bei geöffnetem Radschutz.

Da die Verzögerung $a_2$ der Hauptwelle beim Abbremsen, welche in bevorzugter Weise wie anhand der Fig. 3 und 4 noch erläutert wird, nach dem Unwuchtmeßlauf gemessen worden ist, bekannt ist, läßt sich nach dem Abschalten bzw. Umschalten auf Leerlauf des Hauptwellenantriebs, wie insbesondere aus der Fig. 1 hervorgeht, der Zeitpunkt nach Ablauf des Zeitintervalls $t_L$ festlegen, von welchem an die Hauptwelle abgebremst wird, damit sich ein Bremsweg ergibt, an dessen Ende die Hauptwelle in die zweite Ausgleichswinkellage zu liegen kommt. Während der Zeit $t_B$ erfolgt das Abbremsen der Hauptwelle (Fig. 1). Dieses Abbremsen kann auch in zwei Stufen (zwei Bremsphasen) stattfinden wie es beim Abbremsen nach dem Meßlauf erfolgte. Dieser Bremsvorgang wird anhand der Fig. 3 und 4 noch erläutert.

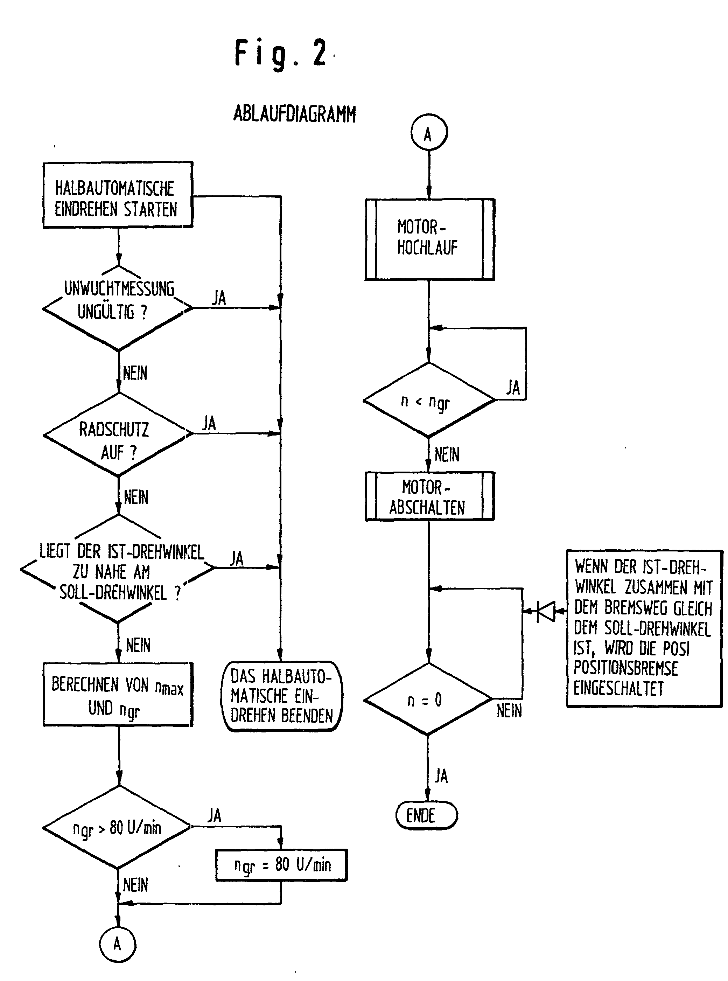

Dieser halbautomatische Eindrehvorgang ist im Ablaufdiagramm der Fig. 2 ebenfalls dargestellt.

Zum Abbremsen der Hauptwelle kann eine Elektromagnetbremse verwendet werden, wie sie aus der EP 550 816 A1 bekannt ist. Im Verlauf des Bremsvorganges kann zu einem bestimmten Zeitpunkt (Winkellage), insbesondere kurz (etwa 5° bis 15°) vor Erreichen der Ausgleichswinkellage die Differenz aus der zu diesem Zeitpunkt vorliegenden Ist-Drehzahl und einer aufgrund der gemessenen Bremsverzögerung zu diesem Zeitpunkt berechneten Soll-Drehzahl ermittelt und das Bremsmoment der Elektromagnetbremse zur Anpassung des rechtlichen Bremsweges an den Restdrehwinkel bis zur Ausgleichswinkellage in Abhängigkeit von der ermittelten Differenz eingestellt werden.

In bevorzugter Weise wird jedoch die Bremswirkung allein dadurch erzielt, daß das Drehmoment im Antriebsmotor (Ein-Phasen-Wechselstrommotor oder Drehstrommotor) umgekehrt wird (Gegenstrombremse). Eine derartige Bremswirkung wird in bevorzugter Weise auch beim ersten Stillsetzten der Hauptwelle in der ersten Ausgleichsweinkellage zur Anwendung gebracht. Anhand der Figuren 3 und 4 wird dieser Vorgang erläutert. Der auf der Hauptwelle der Auswuchtmaschine aufgespannte Rotor, insbesondere das Kraftfahrzeugrad, wird in einem Hochlauf mit der Beschleunigung $a_1$ auf Meßdrehzahl gebracht (Fig. 3 und 4). Bei der Meßdrehzahl wird dann die Unwuchtmessung durchgeführt. Der Motor wird dann auf Leerlauf geschaltet und die Gegenstrombremsung eingeschaltet (Zeitpunkt $t_0$), so daß das Abbremsen der Hauptwelle beginnt. Während des Bremsvorganges wird beim dargestellten Ausführungsbeispiel an zwei Meßpunkten (Zeitpunkte t1 und t2) die jeweilige Drehzahl $n_1$, $n_2$ der Hauptwelle gemessen. Es kann auch bei zwei vorgegebenen Drehzahlen $n_1$ und $n_2$ die Zeit (Zeitpunkt $t_1$ und Zeitpunkt $t_2$) gemessen werden. Hieraus berechnet sich die Bremsverzögerung $a_2$ gemäß folgender Gleichung

$$a_2 = \frac{2 \cdot \pi}{60} \cdot \frac{n_2 - n_1}{t_2 - t_1}$$

Im Bremsverlauf wird nun eine Restdrehzahl $n_r$ ausgewählt, bei welcher mit der ermittelten Bremsverzögerung $a_2$ innerhalb einer bestimmten Winkeldifferenz $\varphi_r$, welche bevorzugt 30° beträgt, die Hauptwelle mit dem darauf ausgespannten Rotor zum Stillstand gebracht werden kann. Gegebenenfalls wird zur Einstellung der Drehwinkeldifferenz (Restdrehwinkel $\varphi_r = 30°$) der Bremsvorgang (Gegenstrombremse) ausgeschaltet, so daß exakt die Bremsverzögerung $a_2$, der Restwinkel $\varphi r$ und die Restdrehzahl $n_r$ zueinander passend vorliegen. Die Restdrehzahl $n_r$ ergibt sich nach folgender Formel

$$n_r = \frac{60}{2 \cdot \pi} \cdot \sqrt{-2 \cdot \varphi_r}$$

Während des erneuten Bremsvorgangs (Gegenstrombremse wird wieder eingeschaltet), d.h. der zweiten Bremsphase, fällt die Drehzahl auf $n_{ab}$ ab. Diese Drehzahl wird bevorzugt kurz vor dem Drehwinkel-Sollwert (Ausgleichsdrehwinkellage) erreicht. Die entsprechende Drehwinkelposition $\varphi_{ab}$ kann z.B. 3° vor dem Drehwinkelsollwert (erste Ausgleichsdrehwinkellage) liegen ($\varphi_{ab} = 3°$). Bei Erreichen dieser Drehzahl wird ein Zeitgeber geladen. Der Zeitgeber sieht ein Zeitintervall $t_a$ vor, an dessem Ende die Hauptwelle und das darauf aufgespannte Kraftfahrzeugrad zum Stillstand kommt. Der Zeitgeber sorgt dafür, daß zu diesem Zeitpunkt die durch den elektrischen Antrieb bewirkte Gegenstrombremse abgeschaltet wird, so daß eine Drehung in Gegenrichtung verhindert wird. Das Zeitintervall $t_a$, welches bei der Drehzahl $n_{ab}$ dem Restwinkel $\varphi_{ab}$, welcher beispielsweise 3° beträgt, entspricht, ergibt sich nach folgender Formel

$$t_a = \frac{2 \cdot \pi}{60} \cdot \frac{n_{ab}}{a_2}$$

Die in dieser Formel erhaltene Drehzahl $n_{ab}$ (z. B. $\varphi_{ab} = 3°$) vor dem Erreichen des Winkelsollwertes ist durch folgende Formel gegeben

$$n_{ab} = \frac{60}{2 \cdot \pi} \cdot \sqrt{-2 \cdot \varphi_{ab}}$$

Es ist erforderlich, das Erreichen des Winkelsollwertes (erste Ausgleichsdrehwinkellage) der Hauptwelle und des darauf aufgespannten Rotors (Kraftfahrzeugrades) sofort zu erkennen. In diesem Zeitpunkt wird die Stromzufuhr (Gegenstrom) zum elektrischen Antriebsmotor abgeschaltet. Diese Abschaltung erfolgt zeitabhängig. Mit dem an die Drehung der Hauptwelle bzw. des Rotors in bekannter Weise (DE 31 24 248 A1 oder EP 74 416 A1) gekoppelten Inkrementalgeber ist es bei der niedrigen Drehzahl kurz vor dem Stillstand nicht möglich, exakt dann den Motor (Gegenstrombremse) abzuschalten, wenn die Hauptwelle und der Rotor den Winkelsollwert (Ausgleichsdrehwinkellage) erreicht haben. Wie zu ersehen ist, kann durch eine zeitliche Steuerung des Drehzahlverlaufs der auszuwuchtende Rotor in die gewünschte Stillstandsposition, z. B. Ausgleichswinkellage gebracht werden.

Der Bremsverlauf, bei dem in den Fig. 1 und 2 erläuterten Eindrehvorgang kann auch mit Hilfe des Elektromotors (Ein-Phasen-Wechselstrommotor oder Drehstrommotor) durchgeführt werden. Dabei wird dann ebenfalls insbesondere kurz vor Erreichen des Stillstandes (Ausgleichswinkellage) der Zeitgeber mit der geladenen Zeit $t_a$ zugeschaltet, um den Motor rechtzeitig zur Vermeidung einer Drehung in Gegenrichtung auszuschalten. Der Eindrehvorgang kann jedoch auch in der Weise durchgeführt werden, wie er anhand der Fig. 3 erläutert wurde, d.h. das Zeitintervall $t_L$, während welchem der Antrieb und die Bremse für den Leerlauf der Hauptwelle abgeschaltet sind, kann zwischen zwei Abschnitten des Bremsverlaufes vom Zeitpunkt $t_3$ bis zum Zeitpunkt $t_4$ in Fig. 3 vorgesehen werden. Ferner kann in bevorzugter Weise kurz vor Erreichen der zweiten Ausgleichswinkellage der Zeitgeber, welcher beim Abbremsen nach dem Meßlauf zum Einsatz kommt, geladen werden und für den Stillstand der Hauptwelle durch Abschalten des elektrischen Antriebs, in dem Zeitpunkt, in welchem die Hauptwelle die zweite Ausgleichswinkellage erreicht, sorgen.

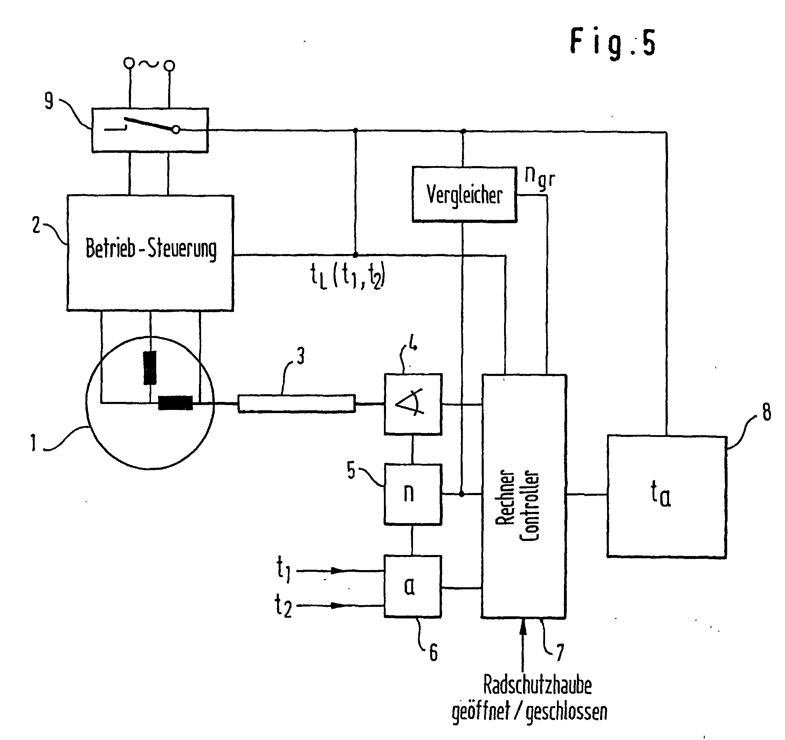

In der Fig. 5 ist ein Blockschaltbild eines Ausführungsbeispiels dargestellt, mit welchem die oben erläuterten Verfahren durchgeführt werden können.

Von einem Antriebsmotor 1, der als Ein-Phasen-Wechselstrommotor ausgebildet ist, wird eine schematisch dargestellte Hauptwelle 3 einer Auswuchtmaschine, auf welche ein nicht näher dargestellter auszuwuchtender Rotor, insbesondere Kraftfahrzeugrad aufgespannt ist, angetrieben. Mit der Hauptwelle ist ein Inkrementalgeber 4 verbunden, der Winkelinkremente liefert. Dieser Inkrementalgeber kann beispielsweise so ausgebildet sein, wie es in der DE 31 24 248 A1 dargestellt ist. An den Inkrementalgeber 4 ist ein Drehzahlgeber 5 angeschlossen, welcher aus der zeitlichen Folge der vom Inkrementalgeber 4 gelieferten Winkelinkremente ein drehzahlproportionales Signal bildet. An den Drehzahlgeber 5 ist ein Bremsverzögerungsgeber 6 angeschlossen, der nach Durchführung des Unwucht-meßlaufes zu verschiedenen Zeiten $t_1$ und $t_2$ (Fig. 1) die vom Drehzahlgeber 5 gelieferten drehzahlproportionalen Signale ermittelt und unter Berücksichtigung der Zeitdifferenz $t_2 - t_1$ ein während des Bremsvorganges proportionales Bremsverzögerungssignal bildet.

Die Steuerung der verschiedenen Betriebszustände des Elektromotors 1 erfolgt mit Hilfe einer Betriebssteuerungseinrichtung 2, welche verschiedene Relais für den Vorwärts- und Rückwärtslauf des Motors sowie zum Schalten eines Drehmomentkondensators aufweist. Diese Betriebssteuereinrichtung 2 kann so ausgebildet sein, wie es aus der EP 0 524 465 A1 für einen Ein-Phasen-Wechselstrommotor bekannt ist. Es kann eine Vorrichtung zum Kleinhalten der Schaltfunken (Lichtbogenbildung) an den Motorrelais vorgesehen sein. Hierzu kann eine Verstärkerschaltung zur Erfassung der Relais-Schaltzeiten durch programmgesteuertes Auswerten des Stromverlaufs in den Relaisspulen beim Ein- und Ausschalten, eine Verstärkerschaltung zum Umsetzen der Netzspannung in ein netzfrequentes Rechtecksignal zum programmgesteuerten netzsynchronen Schalten der Relais sowie ein Widerstand zum Entladen des Drehmomentkondensators für den Ein-Phasen-Wechselstrommotor über den Ruhekontakt des zum Schalten des Drehmomentkondensators dienenden Relais, so daß dessen Ladungszustand beim Einschalten bekannt ist, vorgesehen sein. Kleine Schaltfunken werden durch Öffnen der Relaiskontakte kurz vor dem Nulldurchgang der Netzspannung erreicht.

Die vom Inkrementalgeber 4, dem Drehzahlgeber 5 und dem Bremsverzögerungsgeber 6 gebildeten Signale werden in einem Rechner 7, der als Microcontroller ausgebildet sein kann, ausgewertet. Der Rechner 7 bestimmt aus der Bremsverzögerung, welche vom Bremsverzögerungsgeber 6 geliefert wird, den resultierenden Bremsweg, welchen die Hauptwelle 3 und der darauf ausgespannte Rotor beim Bremsvorgang zurücklegen. Dieser Bremsweg entspricht einem bestimmten Drehwinkel. Da durch den Inkrementalgeber 4 der jeweilige Drehwinkel der Hauptwelle 3 ermittelt wird, führt der Rechner 7 eine Steuerung, insbesondere durch entsprechende Änderung der Drehzahl der Hauptwelle so durch, daß das Ende des ermittelten Bremsweges mit der gewünschten Drehwinkel-Stillstandsposition, welche der Ausgleichswinkellage, in welcher der Unwuchtausgleich durchgeführt wird, entspricht, zusammenfällt.

Bei dem in Fig. 1 dargestellten Eindrehvorgang, bei welchem die Hauptwelle 3 mit dem darauf befindlichen Rotor aus der Stillstandsposition in eine Ausgleichswinkelllage gebracht wird, wird eine Starttaste betätigt, mit welcher der Motorstrom beispielsweise durch Schließen des Schalters 9 eingeschaltet wird. In bevorzugter Weise handelt es sich hier um die gleiche Schalttaste, welche zum Starten des Unwuchtmeßlaufs bei geschlossener Radschutzhaube betätigt wird. Bei dem in Fig. 1 dargestellten Eindrehvorgang, bei welchem der Rotor aus der ersten Ausgleichswinkellage in eine zweite Ausgleichswinkellage eingedreht wird, befindet sich die Radschutzhaube in geöffneter Position. Dem Rechner 7 wird ein entsprechendes Signal zugeleitet. Aufgrund dieses Signals wird bei einer bestimmten Drehzahl $n_{gr}$ der Hochlauf abgeschaltet. Diese Drehzahlschwelle, welche beispielsweise bei 80 U/min liegen kann, wird in einem Vergleicher 10 überwacht. Der Vergleicher 10 vergleicht die von dem Rechner 7 gelieferte maximale Drehzahl $n_{gr}$ mit dem vom Drehzahlgeber 5 ständig gelieferten Ist-Wert der Drehzahl und schaltet bei Erreichen der Drehzahl $n_{gr}$ den Motorantrieb, beispielsweise durch Öffnen des Schalters 9, ab oder die Betriebssteuereinrichtung 2 auf Leerlauf.

Der Inkrementalgeber 4 liefert ständig die aktuelle Ist-Drehwinkelposition, welche die Hauptwelle 3 und der darauf ausgespannte Rotor einnehmen. Aus der beim Abschalten des Motors 1 vorhandenen Drehwinkelposition der Hauptwelle 3 und der vorher schon während des Abbremsens nach dem Unwuchtmeßlauf ermittelten Bremsverzögerung $a_2$ der Hauptwelle, bestimmt der Rechner 7 das Zeitintervall $t_L$, während welchem der Elektromotor 1 ausgeschaltet bleibt und die Hauptwelle 3 mit dem darauf befindlichen Rotor im wesentlichen mit der Drehzahl $n_{gr}$ sich weiter dreht. Nach Ablauf der Zeit $t_L$ wird der Motorstrom durch Schließen des Schalters 9 wieder eingeschaltet. Die Betriebssteuereinrichtung 2 wird auf Bremsbetrieb (Gegenstrombremse) eingestellt. Dies entspricht dem in Fig. 4 der EP 0 524 465 B1 dargestellten Schaltzustand. Der sich aus der Bremsverzögerung $a_2$ ergebende Bremsweg während der Abbremszeit $t_B$ entspricht dem Drehwinkel, welchen die Hauptwelle 3 bis zum Erreichen der Ausgleichswinkellage zurücklegt. In einer Drehwinkellage kurz (z.B. 3°) vor Erreichen der Ausgleichswinkellage wird ein Zeitgeber 8 zugeschaltet, der mit der oben definierten Zeit $t_a$ geladen ist. Diese Zeit bestimmt sich aus der gemessenen Bremsverzögerung $a_2$ der Drehwinkellage und Drehzahl der Hauptwelle 3 zum Zeitpunkt der Zuschaltung des Zeitgebers 8. Nach Ablauf des Zeitintervalls $t_a$ wird der Motorstrom beispielsweise durch Öffnen des Schalters 9 zum Zeitpunkt des Stillstandes der Hauptwelle 3, d.h. am Ende des Bremsweges abgeschaltet, so daß ein Drehen in Gegenrichtung verhindert wird.

Bei dem in den Fig. 1 und 2 dargestellten Ausführungsbeispiel erfolgt die Anpassung des Bremsweges an den bis in die Ausgleichswinkellage zurückzulegenden Drehwinkel dadurch, daß der Einschaltzeitpunkt für den Bremsvorgang durch entsprechende Bemessung des Zeitintervalls $t_L$ so gelegt ist, daß Übereinstimmung zwischen Bremsweg und Drehwinkel besteht. Es ist jedoch auch möglich, den Bremsvorgang in zwei Abschnitten so durchzuführen, wie er beim Abbremsen der Hauptwelle 3 und des Rotors nach dem Unwuchtmeßlauf erfolgte. Dieser Bremsvorgang ist in den Fig. 3 und 4 erläutert. Mit Hilfe der in Fig. 5 dargestellten Vorrichtung wird dieser Bremsverlauf in zwei Abschnitten wie folgt durchgeführt. Beim dargestellten Ausführungsbeispiel der Fig. 3 wird der Bremsvorgang während eines Zeitraumes zwischen den Zeitpunkten $t_3$ und $t_4$ (Fig. 3) unterbrochen.

Während des Abbremsens der Hauptwelle 3 und des darauf ausgespannten Rotors nach dem Meßlauf wird die Betriebssteuereinrichtung 2 vom Rechner 7 oder einer anderen zentralen nicht näher dargestellten Recheneinheit so angesteuert, daß beispielsweise der in Fig. 4 der EP 0 524 465 B1 dargestellte Schaltzustand der Relais und Kondensatoren vorliegt. Dieser Betriebszustand, welcher eine erste Bremsphase darstellt, ist während eines Zeitraumes vorhanden, der in der Fig. 3 vom Einschaltzeitpunkt $t_0$ des Bremsvorganges (Gegenstrombremse wird eingeschaltet) bis zum Zeitpunkt $t_3$ (Gegenstrombremse wird ausgeschaltet) vorhanden ist. Beim Ausschalten der Gegenstrombremse während eines Zeitraumes $t_3$ bis $t_4$ kann beispielsweise in der Betriebssteuereinrichtung 2 der in Fig. 3 der EP 0 524 465 dargestellte Betriebszustand (Leerlauf) eingestellt werden. Während dieser Zeit dreht die Hauptwelle 3 für einen kurzen Zeitraum vom Zeitpunkt $t_3$ bis zum Zeitpunkt $t_4$ mit fast konstanter Drehzahl $n_r$ weiter. Durch diese Unterbrechung des Bremsvorganges wird erreicht, daß der tatsächliche Bremsweg so eingestellt wird, daß beim Wiedereinschalten des Bremsvorganges zum Zeitpunkt $t_4$ am Ende der zweiten Bremsphase der Winkel-Sollwert (Ausgleichsdrehwinkellage) der Hauptwelle 3 und des darauf aufgespannten Rotors erreicht wird.

Bei der Durchführung des Bremsvorganges mit Hilfe des für den Antrieb der Hauptwelle 3 verwendeten Elektromotors 1 ist es erforderlich, daß bei Erreichen des Endes des Bremsvorganges, d.h. bei Stillstand (Drehzahl 0) der Hauptwelle 3, der Motor abgeschaltet wird, um ein Drehen des Motors und der Hauptwelle in der Gegenrichtung zu vermeiden. Das Abschalten des Motors läßt sich jedoch nicht exakt durchführen, wenn bei niedriger Drehzahl in der Nähe des Stillstandes nur die vom Inkrementalgeber 4 vermittelten Winkelinformationen ausgewertet werden. Bei niedrigen Drehzahlen sind nämlich die Zeitintervalle zwischen den einzelnen vom Inkrementalgeber abgegebenen Impulse so groß, daß die momentane Drehzahl nur mit Zeitverzögerung ermittelt werden kann, so daß das Ausschalten des Motors zur Verhinderung eines Weiterdrehens in Gegenrichtung nach Erreichen des Stillstands allein aus den Informationen des Inkrementalgebers nicht verhindert werden kann. Zur Überwindung dieser Schwierigkeit ist mit dem Rechner 7 der Zeitgeber 8 verbunden, der mit einer Zeit (oben definiertes Zeitintervall $t_a$) bei Erreichen einer bestimmten Drehzahlschwelle geladen wird. Diese Drehzahlschwelle liegt bei der oben definierten Drehzahl $n_{ab}$ und kann beispielsweise dann vorliegen, wenn bis zum Erreichen der Ausgleichsposition noch ein Restwinkel $\varphi_{ab}$ von beispielsweise 3° vorhanden ist. Wie oben erläutert, wird das Zeitintervall $t_a$ bestimmt aus der bei Zuschaltung des Zeitgebers 8 vorhandenen Drehzahl $n_{ab}$, dem Restwinkel $\varphi_{ab}$, der Bremsverzögerung a und, falls eine Schaltverzögerung $t_{RV}$, für das bzw. die zuschaltenden Relais in der Betriebssteuereinrichtung 2 zu berücksichtigen sind, dieser Schaltverzögerung, wie oben erläutert. Nach Ablauf des Zeitintervalls $t_a$ wird durch den Zeitgeber 8 veranlaßt, daß ein Schalter 9 geöffnet wird, so daß die Stromzufuhr zum Elektromotor 1 unterbrochen wird. Es kann sich hierbei beispielsweise um den Netzschalter handeln, mit welchem der Antriebsmotor an das Versorgungsnetz angeschlossen ist. Dieser Ausschaltvorgang fällt mit dem Erreichen der Ausgleichsdrehwinkellage zusammen, so daß gewährleistet ist, daß die Hauptwelle 3 in dieser Drehwinkellage stillsteht. Die Zuschaltung des Zeitgebers 8 kann zu jedem Zeitpunkt innerhalb der zweiten Bremsphase ab dem Zeitpunkt $t_4$ erfolgen. Innerhalb dieser Bremsphase (zweite Bremsphase beim Ausführungsbeispiel) ist gewährleistet, daß das Ende des restlichen Bremsweges mit der gewünschten Drehwinkel-Stillstandsposition (Ausgleichswinkellage) der Hauptwelle und des darauf aufgespannten Rotors zusammenfällt.

**Patentansprüche**

1. Verfahren zum Eindrehen eines in einer Auswuchtmaschine drehgelagerten und mittels eines Antriebs antreibbaren Rotors, insbesondere Kraftfahrzeugrades, in Ausgleichspositionen zweier Ausgleichsebenen für einen dynamischen Unwuchtmassenausgleich, bei dem

   - nach einem Unwuchtmeßlauf, in welchem die Ausgleichsposition und Ausgleichsmassen in den beiden Ausgleichsebenen bestimmt werden, der Rotor zum Eindrehen in die Ausgleichsposition der ersten Ausgleichsebene abgebremst und die dabei auftretende Verzögerung des Rotors gemessen wird;

   - der Rotor für das Eindrehen in die Ausgleichsposition der zweiten Ausgleichsebene auf eine bestimmte Drehzahl, die höchstens 80 U/min beträgt, durch den Antrieb beschleunigt wird; und

   - nach dem Beenden des Antriebs der Rotor so abgebremst wird, daß der aus der gemessenen Verzögerung des Rotors resultierende Bremsweg dem noch verbleibenden Differenzwinkel bis zur Ausgleichsposition in der zweiten Ausgleichsebene entspricht.

2. Verfahren nach Anspruch 1, **dadurch gekennzeichnet, daß** die Beschleunigung des Rotors im Hochlauf während des Hochlaufs auf die Meßdrehzahl beim Unwuchtmeßlauf oder beim Eindrehen in die Ausgleichsposition der zweiten Ausgleichsebene gemessen wird und daß die maximale Drehzahl $n_{max}$ beim Eindrehen in die Ausgleichsposition der zweiten Ausgleichsebene durch die Gleichung

$$n_{max} = \frac{60}{2 \cdot \pi} \sqrt{2 \cdot \varphi_g \frac{a_1 \cdot a_2}{a_2 - a_1}}$$

   bestimmt wird, wobei $a_1$ die Beschleunigung beim Hochlauf der Hauptwelle, $a_2$ die Bremsverzögerung beim Abbremsen der Hauptwelle und $\varphi_g$ die Differenz zwischen der Ist-Drehwinkellage und der Soll-Drehwinkellage bedeuten.

3. Verfahren nach Anspruch 1 oder 2, **dadurch gekennzeichnet, daß** die Hauptwelle mit einer Elektromagnetbremse abgebremst wird.

4. Verfahren nach einem der Ansprüche 1 bis 3, **dadurch gekennzeichnet, daß** die Hauptwelle durch Umkehrung des Drehmoments eines elektrischen Antriebsmotors für die Hauptwelle abgebremst wird.

5. Verfahren nach Anspruch 4, **dadurch gekennzeichnet, daß** ein Ein-Phasen-Wechselstrommotor oder Drehstrommotor für den Antrieb und das Abbremsen der Hauptwelle verwendet wird.

6. Verfahren nach Anspruch 4 oder 5, **dadurch gekennzeichnet, daß** im Verlauf des Bremsvorganges bei der gemessenen Bremsverzögerung vor Erreichen der jeweiligen Ausgleichsposition ein Zeitgeber zugeschaltet wird, der ein aus der zum Zeitpunkt der Zuschaltung vorliegenden Drehzahl und Drehwinkelposition des Rotors bestimmtens Zeitintervall vorgibt, an dessem Ende auf einer von der Drehung der Hauptwelle unabhängigen Zeitbasis bei Stillstand (Drehzahl 0) der Hauptwelle der Motorstrom abgeschaltet wird.

7. Verfahren nach Anspruch 6, **dadurch gekennzeichnet, daß** während des Bremsvorganges die Bremsverzögerung des Rotors ermittelt wird und bei einer auf einen bestimmten Wert verzögerten Drehzahl der Zeitgeber zugeschaltet wird.

8. Verfahren nach Anspruch 6 oder 7, **dadurch gekennzeichnet, daß** vor der Zuschaltung des Zeitgebers das Abbremsen des Rotors solange unterbrochen wird, daß bei der gemessenen Bremsverzögerung innerhalb eines bestimmten Drehwinkelbereiches, der größer ist als der bei Zuschaltung des Zeitgebers von dem Rotor bis zum Stillstand zurückzulegende Drehwinkel, die Ausgleichsposition vom Rotor erreicht wird.

9. Verfahren nach Anspruch 1, **dadurch gekennzeichnet, daß** der Rotor nach dem Meßlauf in der Ausgleichsposition der ersten Ausgleichsebene dadurch angehalten wird, daß aus der gemessenen Verzögerung ein resultierender Bremsweg, der einem bestimmten Drehwinkel entspricht, ermittelt wird, und daß der Bremsvorgang so gesteuert wird, daß das Ende des ermittelten Bremsweges mit der Ausgleichswinkellage der ersten Ausgleichsebene zusammenfällt.

10. Verfahren nach einem der Ansprüche 6 bis 9, **dadurch gekennzeichnet, daß** der Zeitgeber kurz, insbesondere etwa 3° vor Erreichen des Stillstandes des Rotors zugeschaltet wird.

11. Verfahren nach Anspruch 1, **dadurch gekennzeichnet, daß** der Eindrehvorgang aus dem Stillstand in die Ausgleichsposition der zweiten Ausgleichsebene bei geöffnetem und dadurch eine Begrenzung der Drehzahl bewirkenden Radschutz durch Betätigen des Schalters (Taste) gestartet wird, mit welchem bei beschlossenem Radschutz der Unwuchtmeßlauf gestartet wird.

12. Verfahren nach Anspruch 3, **dadurch gekennzeichnet, daß** im Verlauf des Bremsvorganges zu einem bestimmten Zeitpunkt (Winkelabstand) vor Erreichen der Ausgleichswinkellage die Differenz aus der zu diesem Zeitpunkt vorliegenden Ist-Drehzahl und einer aufgrund der gemessenen Bremsverzögerung zu diesem Zeitpunkt berechneten Soll-Drehzahl ermittelt und das Bremsmoment der Elektromagnetbremse zur Anpassung des restlichen Bremsweges an den Restdrehwinkel bis zur Ausgleichswinkellage in Abhängigkeit von der ermittelten Differenz eingestellt wird.

## Claims

1. A method of rotating a rotary member, in particular a motor vehicle wheel, which is rotatably mounted in a balancing machine and drivable by means of a drive, into balancing positions in two balancing planes for dynamic balancing, wherein

   - after an unbalance measuring run in which the balancing positions and balancing masses in the two balancing planes are determined the rotary member is braked to be rotated into the balancing position in the first balancing plane and the deceleration of the rotary member which occurs in that case is measured;
   - the rotary member is accelerated by the drive means to a given rotary speed which is at most 80 rpm for rotation into the balancing position in the second balancing plane; and
   - after termination of the drive the rotary member is braked so that the braking travel resulting from the measured deceleration of the rotary member corresponds to the differential angle that still remains as far as the balancing position in the second balancing plane.

2. A method according to claim 1 **characterised in that** the acceleration of the rotary member in the acceleration phase is measured during acceleration to the measurement rotary speed in the unbalance measuring run or when rotating the rotary member into the balancing position in the second balancing plane and that the maximum rotary speed $n_{max}$ when rotating the rotary member into the balancing position in the second balancing plane is determined by the equation:

$$n_{max} = \frac{60}{2 \cdot \pi} \sqrt{2 \cdot \varphi_g \frac{a_1 \cdot a_2}{a_2 - a_1}}$$

   wherein

   $a_1$ denotes the acceleration in the acceleration phase of the main shaft,
   $a_2$ denotes the braking deceleration when braking the main shaft, and
   $\varphi_g$ denotes the difference between the actual rotary angle position and the reference rotary angle position.

3. A method according to claim 1 or claim 2 **characterised in that** the main shaft is braked by an electromagnetic brake.

4. A method according to one of claims 1 to 3 **characterised in that** the main shaft is braked by reversal of the torque of an electric motor for the main shaft.

5. A method according to claim 4 **characterised in that** a single-phase ac motor or a three-phase motor is used for the drive and for braking of the main shaft.

6. A method according to claim 4 or claim 5 **characterised in that** in the course of the braking operation with the measured braking deceleration before the respective balancing position is reached a timer is switched on, which predetermines a time interval determined from the rotary angle position of the rotary member and the rotary speed at the time of the timer being switched on, at the end of which time interval the motor current is switched off on a time basis which is independent of the rotation of the main shaft in the stopped condition (rotary speed 0) of the main shaft.

7. A method according to claim 6 **characterised in that** during the braking operation the braking deceleration of the rotary member is ascertained and the timer is switched on at a rotary speed which is decelerated to a given value.

8. A method according to claim 6 or claim 7 **characterised in that** prior to the timer being switched on braking of the rotary member is interrupted until at the measured level of braking deceleration the balancing position is reached by the rotary member within a given rotary angle range which is greater than the rotary angle which is to be covered by the rotary member to the stopped condition when the timer is switched on.

9. A method according to claim 1 **characterised in that** after the measuring run the rotary member is stopped in the balancing position in the first balancing plane by ascertaining from the measured deceleration a resulting braking travel which corresponds to a given rotary angle and that the braking operation is so controlled that the end of the ascertained braking travel coincides with the balancing position in the first balancing plane.

10. A method according to one of claims 6 to 9 **characterised in that** the timer is switched on shortly before, about 3°, before the stopped condition of the rotary member is reached.

11. A method according to claim 1 **characterised in that** the procedure for rotating the rotary member from the stopped condition into the balancing position in the second balancing plane is started when the wheel guard is open and thereby limits the rotary speed by actuation of the switch (button) with which the unbalance measuring run is started when the wheel guard is closed.

12. A method according to claim 3 **characterised in that** in the course of the braking operation at a given time (angular spacing) before the angular balancing position is reached the difference of the actual rotary speed at that time and a reference rotary speed calculated on the basis of the measured braking deceleration at that time is ascertained and the braking moment of the electromagnetic brake is adjusted to adapt the remaining braking travel to the residual rotary angle as far as the angular balancing position in dependence on the ascertained difference.

**Revendications**

1. Procédé de positionnement d'un rotor, en particulier d'une roue de véhicule, monté à rotation et raccordé à un entraînement d'une machine d'équilibrage, dans les positions d'équilibrage en deux plans, pour une compensation de balourd dynamique, suivant lequel

- à la suite d'une marche de mesure du balourd, au cours de laquelle on détermine la position d'équilibrage et les masses d'équilibrage dans les deux plans d'équilibrage, on freine le rotor pour le positionner dans la position d'équilibrage du premier plan d'équilibrage, et on mesure la décélération du rotor qui a eu lieu ;
- pour le positionner dans la position d'équilibrage du second plan d'équilibrage, le rotor est accéléré par l'entraînement à une vitesse de rotation donnée, au plus égale à 80 tr/min ; et
- après avoir arrêté l'entraînement, le rotor est freiné de façon que la course de freinage résultant de la décélération mesurée du rotor soit égale à l'angle différentiel résiduel jusqu'à la position d'équilibrage dans le second plan d'équilibrage.

2. Procédé suivant la revendication 1, **caractérisé en ce qu'**on mesure l'accélération du rotor pendant la marche d'accélération à la vitesse de rotation de mesure lors de la marche de mesure du balourd ou lors du positionnement dans la position d'équilibrage du second plan d'équilibrage, et **en ce qu'**on détermine la vitesse de rotation maximale $n_{max}$ lors du positionnement dans la position d'équilibrage du second plan d'équilibrage par l'équation

$$n_{max} = \frac{60}{2 \cdot \pi} \sqrt{2 \cdot \varphi_g \frac{a_1 \cdot a_2}{a_2 - a_1}}$$

où

$a_1$ est l'accélération lors de la marche d'accélération de l'arbre principal,

$a_2$ est la décélération de freinage lors du freinage de l'arbre principal, et

$\varphi_g$ est la différence entre la position angulaire de rotation effective et la position angulaire de rotation de consigne.

**3.** Procédé suivant la revendication 1 ou 2, **caractérisé en ce que** l'arbre principal est freiné par un frein électromagnétique.

**4.** Procédé suivant l'une des revendications 1 à 3, **caractérisé en ce que** l'arbre principal est freiné en inversant le couple de rotation d'un moteur d'entraînement électrique pour l'arbre principal.

**5.** Procédé suivant la revendication 4, **caractérisé en ce qu'**on utilise pour l'entraînement et le freinage de l'arbre principal un moteur à courant alternatif monophasé ou un moteur à courant triphasé.

**6.** Procédé suivant la revendication 4 ou 5, **caractérisé en ce que**, au cours du processus de freinage, lors de la décélération de freinage mesurée avant l'atteinte de la position d'équilibrage respective, on enclenche une horloge qui alloue un intervalle de temps déterminé à partir de la vitesse de rotation et de la position angulaire de rotation du rotor existantes à l'instant de l'enclenchement, intervalle à l'achèvement duquel, sur une base de temps indépendante de la rotation de l'arbre principal, le courant du moteur est coupé à l'arrêt (vitesse de rotation 0) de l'arbre principal.

**7.** Procédé suivant la revendication 6, **caractérisé en ce qu'**on détermine pendant le processus de freinage la décélération de freinage du rotor, et on enclenche l'horloge lorsque la vitesse de rotation est tombée à une valeur donnée.

**8.** Procédé suivant la revendication 6 ou 7, **caractérisé en ce que**, avant d'enclencher l'horloge, le freinage du rotor est interrompu jusqu'à ce que, lors de la décélération de freinage mesurée; le rotor atteigne la position d'équilibrage à l'intérieur d'une plage donnée d'angle de rotation qui est supérieure à l'angle de rotation à accomplir par le rotor depuis l'enclenchement de l'horloge jusqu'à l'arrêt.

**9.** Procédé suivant la revendication 1, **caractérisé en ce que**, à la suite de la marche de mesure, le rotor est immobilisé dans la position d'équilibrage du premier plan d'équilibrage par le fait qu'on détermine à partir de la décélération mesurée une course de freinage résultante qui correspond à un angle de rotation donné, et que le processus de freinage est commandé de façon que la fin de la course de freinage déterminée coïncide avec la position angulaire d'équilibrage du premier plan d'équilibrage.

**10.** Procédé suivant l'une des revendications 6 à 9, **caractérisé en ce que** l'horloge est enclenchée peu avant l'atteinte de l'immobilisation du rotor, notamment environ 3° avant.

**11.** Procédé suivant la revendication 1, **caractérisé en ce que** le processus de positionnement à partir de l'arrêt dans la position d'équilibrage du second plan d'équilibrage est démarré, le protecteur de roue étant ouvert et produisant ainsi une limitation de la vitesse de rotation, en actionnant le commutateur (touche) avec lequel est démarrée la marche de mesure de balourd avec le protecteur de roue fermé.

**12.** Procédé suivant la revendication 3, **caractérisé en ce que**, au cours du processus de freinage, à un instant donné (distance angulaire) avant l'atteinte de la position angulaire d'équilibrage, on détermine la différence entre la vitesse de rotation effective existante à cet instant et une vitesse de rotation de consigne calculée sur la base de la décélération de freinage mesurée à cet instant, et on règle le couple de freinage du frein électromagnétique en fonction de la différence déterminée, afin d'adapter la course de freinage résiduelle à l'angle de rotation résiduel jusqu'à la position angulaire d'équilibrage.

Fig.1

n
Drehzahl

DREHZAHLVERLAUF

$n_{max}$

$n_{gr}$

BESCHLEUNIGUNG $a_1$
(HOCHLAUF)

VERZÖGERUNG $a_2$
(BREMSEN)

1. AUSGLEICHS-
WINKELLAGE

2. AUSGLEICHS-
WINKELLAGE

t
Zeit

$t_a$

$t_{HL}$

$t_L$

$t_B$

EP 0 828 148 B1

# Fig. 2

ABLAUFDIAGRAMM

# Fig.3

DREHZAHLVERLAUF

# Fig.4

ABLAUFDIAGRAMM

A

```
┌─────────────────┐
│  MOTORHOCHLAUF  │
└─────────────────┘
         ↓
┌─────────────────┐
│  UNWUCHTMESSUNG │
└─────────────────┘
         ↓
┌─────────────────┐
│ MOTOR ABSCHALTEN│
│   (LEERLAUF)    │
└─────────────────┘
         ↓
┌─────────────────┐
│GEGENSTROMBREMSUNG│
│   EINSCHALTEN   │
└─────────────────┘
```

DREHZAHL >180 U/MIN — JA

NEIN

ZEIT $t_1$ UND DREHZAHL $n_1$ MESSEN

DREHZAHL >90 U/MIN — JA

NEIN

ZEIT $t_2$ UND DREHZAHL $n_2$ MESSEN

A

A

VERZÖGERUNG $a_2$
DREHZAHL $n_r$
DREHZAHL $n_{ab}$
WINKEL $Phi_{brems}$
BERECHNEN

DREHZAHL > $n_r$ — JA

GEGENSTROMBREMSE ABSCHALTEN

AB JETZT KANN DIE POSITIONS-BREMSE AKTIVIERT WERDEN

DREHZAHL > $n_{ab}$ — JA

WENN DER WINKEL-ISTWERT ZUSAMMEN MIT DEM BREMSWEG GLEICH DEM WINKEL-SOLLWERT IST, WIRD DIE GEGENSTROM-BREMSE EINGESCHALTET.
$Phi_{ist} = Phi_{soll} - Phi_{brems}$

BERECHNEN DER ZEIT $t_{aus}$

TIMER MIT $t_a$ LADEN

$t_a > 0$ — JA

POSITIONSBREMSE BEENDEN

Fig.5